(19) Europäisches Patentamt
European Patent Office
Office européen des brevets

(11) **EP 4 687 065 A1**

(12) **EUROPEAN PATENT APPLICATION**

(43) Date of publication:
**04.02.2026 Bulletin 2026/06**

(21) Application number: **25185780.1**

(22) Date of filing: **27.06.2025**

(51) International Patent Classification (IPC):
*G06F 40/284* (2020.01)

(52) Cooperative Patent Classification (CPC):
**G06F 40/284; G06F 40/279**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.07.2024 JP 2024124317**

(71) Applicant: **Fujitsu Limited
Kawasaki-shi, Kanagawa 211-8588 (JP)**

(72) Inventor: **Koda, Satoru
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **PREDICTION PROGRAM, INFORMATION PROCESSING APPARATUS, AND PREDICTION METHOD**

(57) A prediction program that causes a computer to execute a process including allocating an input first character string to a block that satisfies a predetermined condition, predicting, by using a feature amount of each character of a second character string in each block and a detector configured to detect keyword stuffing, a probability that keyword stuffing is present in the second character string, and predicting a center and a length of a keyword segment in the second character string when the probability is a predetermined threshold or more.

FIG.10

EP 4 687 065 A1

**Description**

[Technical Field]

The present embodiment relates to a prediction program, an information processing apparatus, and a prediction method.

[Background Art]

Information-retrieval is a task of extracting a source having information needed for an answer from a retrieval query. Information-retrieval attracts attention in recent years due to the trend of retrieval-augmented generation (RAG).

[Prior Art Reference]

[Patent Document]

[Patent Document 1] Japanese Laid-open Patent Publication No. 2018-77806
[Patent Document 2] Japanese Laid-open Patent Publication No. 2020-46792
[Patent Document 3] United States Laid-open Patent Publication No. 2007/0192309
[Patent Document 4] United States Laid-open Patent Publication No. 2023/0107493.

[Summary of the Invention]

[Problems to be Solved by the Invention]

It is concerned that accuracy of information-retrieval is degraded due to keyword stuffing (in other words, keyword packing).
Keyword stuffing is an attack that raises an information search rank by listing keywords. In the RAG, since the degree of relevance is calculated using only details (in other words, content) of the sentence, it is concerned that keywords in the content affect the information search rank.
In one aspect, an object is to properly detect keyword stuffing.

[Means to Solve the Problem]

According to an aspect of embodiment(s), a prediction program that causes a computer to execute a process including allocating an input first character string to a block that satisfies a predetermined condition, predicting, by using a feature amount of each character of a second character string in each block and a detector configured to detect keyword stuffing, a probability that keyword stuffing is present in the second character string, and predicting a center and a length of a keyword segment in the second character string when the probability is a predetermined threshold or more.

[Effect of Invention]

In one aspect, keyword stuffing can be detected properly.

[Brief Description of Drawings]

Fig. 1 is a diagram illustrating keyword stuffing;
Fig. 2 is a diagram illustrating a keyword stuffing detection process in a related example;
Fig. 3 is a diagram illustrating a problem in a keyword stuffing detection process in the related example illustrated in Fig. 2;
Fig. 4 is a diagram illustrating an input/output description example in the embodiment;
Fig. 5 is a diagram illustrating a backbone network structure according to the embodiment;
Fig. 6 is a diagram illustrating a global detection process of keyword stuffing according to the embodiment;
Fig. 7 is a diagram illustrating details of a detector in the embodiment;

Fig. 8 is a diagram illustrating a correction process using local information for a global detection result in the embodiment;

Fig. 9 is a flowchart illustrating a prediction process of keyword stuffing according to the embodiment;

Fig. 10 is a diagram illustrating a keyword stuffing prediction process according to the embodiment; and

Fig. 11 is a block diagram schematically illustrating a hardware configuration example of an information processing apparatus according to the embodiment.

[Description Of Embodiments]

[A] Related Example

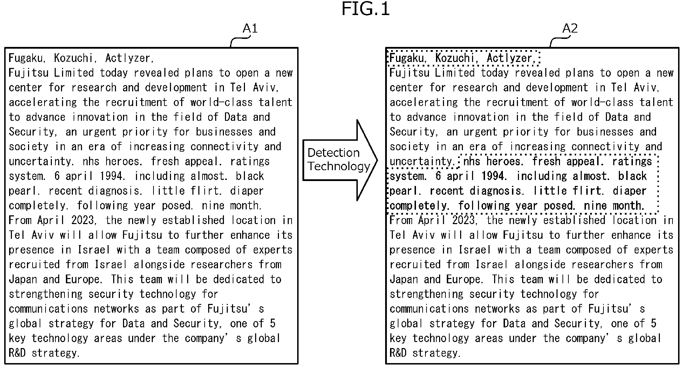

Fig. 1 is a diagram illustrating keyword stuffing.

In Fig. 1, with respect to a sentence indicated by reference numeral A1, an unnatural list of keywords is detected as indicated by a broken-line frame of reference numeral A2 using a keyword stuffing detection technique.

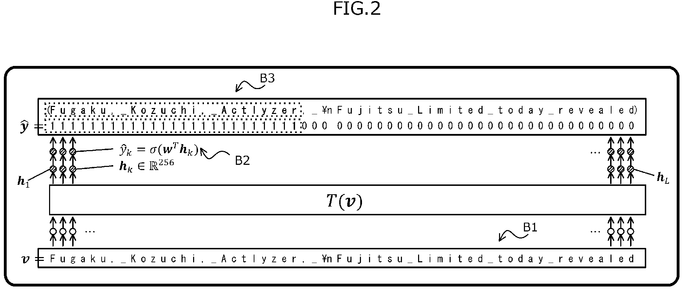

Fig. 2 is a diagram illustrating a keyword stuffing detection process in a related example.

In the example illustrated in Fig. 2, a deep neural network (DNN) that predicts whether keyword stuffing is performed one character by one by a naive detection method is used.

When a character string v is input as indicated by reference numeral B1, it is predicted that the probability of whether a k-th character string $v_k$ is keyword stuffing as indicated by reference numeral B2 is (Formula 1).

[Mathematical Formula 1]

$$\hat{y}_k = \sigma(\boldsymbol{w}^T \boldsymbol{h}_k) \in [0,1] \quad \text{(Formula 1)}$$

The above (Formula 1) is a feature expression (in other words, a final layer of a feature extractor T) of the following (Formula 2).

[Mathematical Formula 2]

$$\boldsymbol{h}_k \in \mathcal{H}: \ v_k \quad \text{(Formula 2)}$$

When the following (Formula 3) is established, a character $v_k$ is regarded as keyword stuffing (in other words, one character in keyword stuffing).

[Mathematical Formula 3]

$$\hat{y}_k > t \quad \text{(Formula 3)}$$

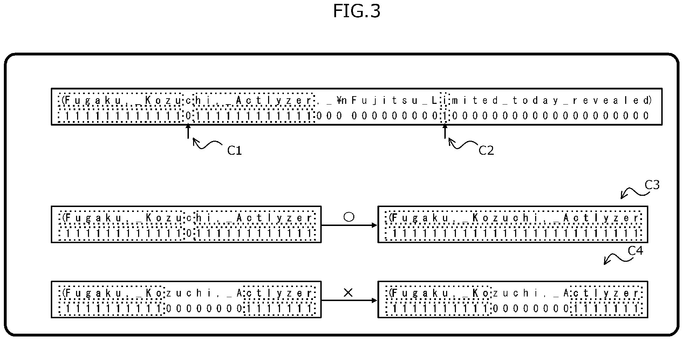

Fig. 3 is a diagram illustrating a problem in a keyword stuffing detection process in the related example illustrated in Fig. 2.

As indicated by reference numerals C1 and C2 in Fig. 3, output continuity is not guaranteed in the keyword stuffing detection process illustrated in Fig. 2 in some cases. In reference numeral C1, an output 0 is sandwiched between consecutive outputs 1. In reference numeral C2, an output 1 is sandwiched between consecutive outputs 0.

Because the influence on the information-retrieval rank is greatest, keyword stuffing generally appears in a continuous range. Although the result can be smoothed by post-processing as indicated by reference numeral C3, erroneous detection or overlooking with a large number of characters is impossible to correct as indicated by reference numeral C4 in some cases.

[B] Embodiment

Hereinafter, an embodiment is described with reference to the drawings. However, the embodiment described below is merely an example, and there is no intention to exclude the application of various modifications and techniques that are not explicitly described in the embodiments. That is, the present embodiment can be variously modified and implemented without departing from the gist thereof. In addition, each drawing is not intended to include only the components illustrated in the drawing but may include other components and the like.

[B-1] Program Configuration Example

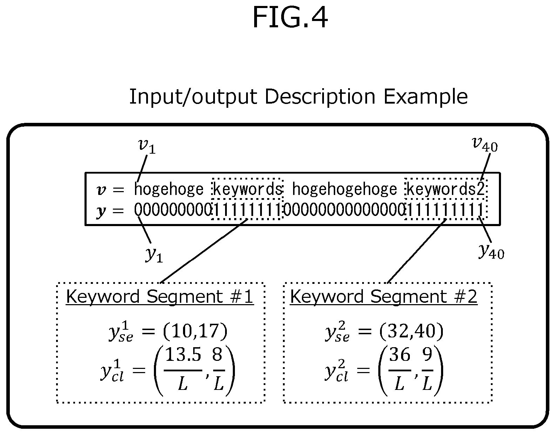

Fig. 4 is a diagram illustrating an input/output description example in the embodiment.

An overall structure F of the keyword stuffing prediction process in the embodiment is represented by $v^L{\rightarrow}y^L$. In

the example illustrated in Fig. 4, L = 40.

The following (Formula 4) represents a character string including L characters.

[Mathematical Formula 4]

$$\boldsymbol{v} = (v_1, \dots, v_L) \in \mathcal{V}^L \qquad \text{(Formula 4)}$$

The following (Formula 5) is a sequence of whether it is keyword stuffing, and the keyword stuffing portion is "1".

[Mathematical Formula 5]

$$\boldsymbol{y} = (y_1, \dots, y_L) \in \mathcal{Y}^L = \{0,1\}^L \text{ (Formula 5)}$$

The keyword segment represents one unit of the keyword portion, and the keyword segments #1 and #2 are illustrated in Fig. 4.

The following (Formula 6) represents se notation (s (start): start point, e (end): end point) of the i-th segment.

[Mathematical Formula 6]

$$y_{se}^i = \left(s^i, e^i\right) \in [1, L] \times [1, L] \qquad \text{(Formula 6)}$$

The following (Formula 7) represents cl notation (c (center): center, l (length): length) of the i-th segment.

[Mathematical Formula 7]

$$y_{cl}^i = \left(c^i, l^i\right) = \left(\frac{e^i + s^i}{2L}, \frac{e^i - s^i + 1}{L}\right) \in [0,1] \times [0,1] \qquad \text{(Formula 7)}$$

Hereinafter, the notation of y is written interchangeably as illustrated in the following (Formula 8).

[Mathematical Formula 8]

$$\boldsymbol{y}_{se} = \left\{y_{se}^i\right\}_i, \quad \boldsymbol{y}_{cl} = \left\{y_{cl}^i\right\}_i \qquad \text{(Formula 8)}$$

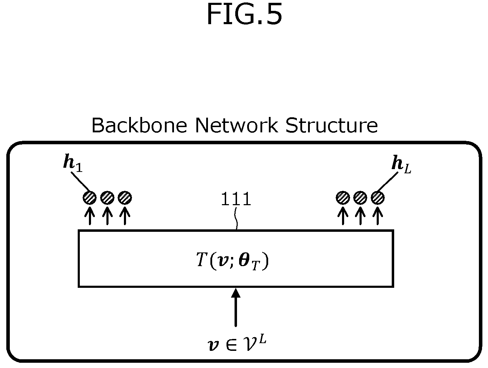

Fig. 5 is a diagram illustrating a backbone network structure according to the embodiment.

A backbone network T (in other words, the feature extractor) of the keyword stuffing prediction process in the embodiment is a DNN that extracts a feature expression for each character from a character string represented by $v^L \rightarrow H^L$.

The following (Formula 9) represents feature expressions for each character.

[Mathematical Formula 9]

$$H = (\boldsymbol{h}_1, \dots, \boldsymbol{h}_L) \in \mathcal{H}^L \qquad \text{(Formula 9)}$$

$\theta_T$ in Fig. 5 represents a weight of the backbone network.

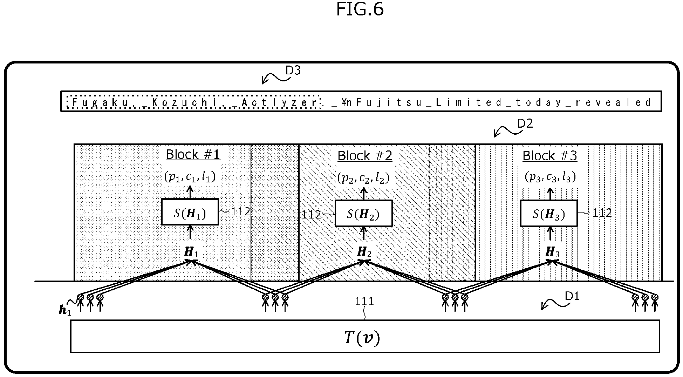

Fig. 6 is a diagram illustrating a global detection process of keyword stuffing according to the embodiment.

In Fig. 6, an output from the feature extractor 111 (T(v) in Fig. 6) indicated by reference numeral D1 is input to a detector 112 (S(H$_1$), S(H$_2$), and S(H$_3$) in Fig. 6) indicated by reference numeral D2.

The feature extractor 111 allocates the input first character string (in other words, the character string v) to a block that satisfies a predetermined condition. In the process of allocating to the block, allocation may be performed in which at least some of the second character strings included in the adjacent blocks overlap each other.

In the example illustrated in Fig. 6, the sequence is divided into blocks (Blocks #1, #2, and #3 in Fig. 6), and the presence probability, the center position, and the length of the keyword stuffing for each block are predicted.

The detector 112(S) performs the detection process using the following (Formula 10). K represents a block size. The block size K can be variously set, and any length of keyword stuffing can be detected.

[Mathematical Formula 10]

$$\mathcal{H}^K \rightarrow [0,1] \times \mathbb{Z} \times \mathbb{Z} \qquad \text{(Formula 10)}$$

At the output of the detector 112(S), p represents the probability that a "center" of keyword stuffing is present in the block, and c and l represent the center (c) and the length (l) of the predicted keyword segment. The block in which the center of the keyword is not present has $p_k \approx 0$.

In the output indicated by reference numeral D3, the probability that the keyword stuffing center is present in the character string corresponding to the block #1 is high, the center $c_1 = 13$, and the length $l_1 = 25$.

That is, the detector 112 predicts the probability that keyword stuffing is present in the second character string by using the feature amount of each character of the second character string included in each block. The detector 112 predicts the center and the length of the keyword segment in the second character string when the probability is equal to or greater than a predetermined threshold.

The process of predicting the probability may predict the probability that the true center of keyword stuffing is present in the second character string. Note that, as described above, the keyword segment is one unit of the keyword stuffing portion. In the training of the detector 112, when a training sample configured with a character string including keyword stuffing is given, a plurality of present blocks may be trained so that true positions (the centers and the lengths) of all keyword segments in the training sample can be thoroughly predicted.

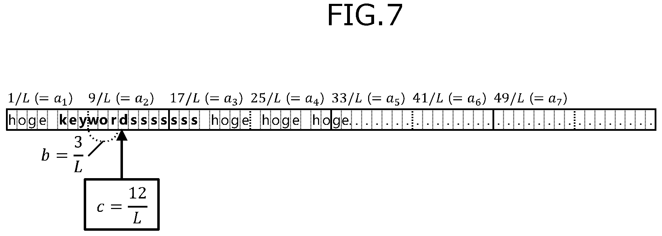

Fig. 7 is a diagram illustrating details of the detector 112 in the embodiment.

The detector 112 that may be referred to as a segment module is a DNN that predicts keyword stuffing for each block.

The detector 112(S) performs an operation represented by $H^K \rightarrow [0,1] \times [0,1] \times [0,1]$.

When (K, W) represents (block size, sliding window size), and $H_k$ is the notation of the feature amount of the k-th block, H1 = $(h_1,...,$ and $h_K)$, H2 = $(h_w,...,$ and $h_{W+K}),...$ and the like are established.

Further, $S(H_k; \theta_S) = (p, b, l)$ is established. P is the confidence that keyword stuffing is present, b is the length from the block start position $a_k (= ((k - 1)*W + 1)/L)$ (that is, $c = \exists a_k + b$), and l is the length.

In the training phase, a loss function $L(\theta_T, \theta_S)$ represented in the following (Formula 11) is minimized.

[Mathematical Formula 11]

$$L(\boldsymbol{\theta}_T, \boldsymbol{\theta}_S) = \sum_{(\boldsymbol{v},\boldsymbol{y})} E[\boldsymbol{y}, S(T(\boldsymbol{v}; \boldsymbol{\theta}_T); \boldsymbol{\theta}_S)] \quad \text{(Formula 11)}$$

[Mathematical Formula 12]

$$E[\boldsymbol{y}, S(T(\boldsymbol{v}; \boldsymbol{\theta}_T); \boldsymbol{\theta}_S)] = \sum_k \sum_{i \in \tau(k)} \left[ \left(c^i - (a_k + \hat{b}_k)\right)^2 + \left(l^i - \hat{l}_k\right)^2 \right]$$

$$+ \lambda_{pos} \sum_{k:\tau(k) \neq \emptyset} [-\log(\hat{p}_k)]$$

$$+ \lambda_{neg} \sum_{k:\tau(k) = \emptyset} [-\log(1 - \hat{p}_k)] \quad \text{(Formula 12)}$$

In (Formula 12) described above, the first term represents a sum (to be decreased) of a centroid error and a length error, the second term represents the probability that the keyword is present (aligned with the true number of 1), and the second term represents the probability that the keyword is not present (aligned with the true number of 0).

The following (Formula 13) represents a prediction result of a block k.

[Mathematical Formula 13]

$$\left(\hat{p}_k, \hat{b}_k, \hat{l}_k\right) = S(T(\boldsymbol{v}; \theta_T)_k; \boldsymbol{\theta}_S) \quad \text{(Formula 13)}$$

$\tau(k)$ is a subscript set of the keyword segment that is to be charged by the k-th block. The block k to which a centroid $c^i$ of a segment i belongs take charge of detection. Strictly speaking, k satisfies the following (Formula 14).

[Mathematical Formula 14]

$$c^i \in [a_k, a_{k+1}) \quad \text{(Formula 14)}$$

In the example illustrated in Fig. 7, $\tau(2) = \{1\}$, and $\tau(k \neq 2) = \{\}$ (empty set).

The following (Formula 15) represents a weight to a block in which the keyword segment is present, and the following (Formula 16) represents a weight (negative block) to a block in which the keyword segment is not present.

[Mathematical Formula 15]

$$\lambda_{pos} \in \mathbb{R}_+ \qquad (\text{Formula } 15)$$

[Mathematical Formula 16]

$$\lambda_{neg} \in \mathbb{R}_+ \qquad (\text{Formula } 16)$$

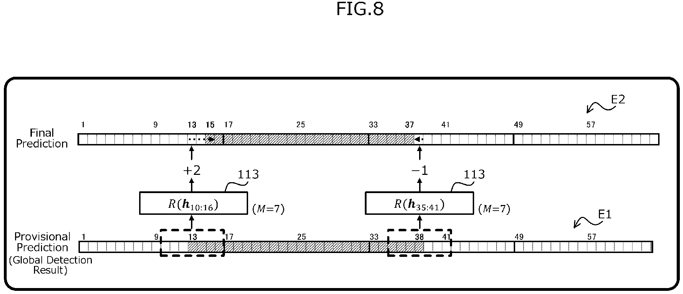

Fig. 8 is a diagram illustrating a correction process using local information for a global detection result in the embodiment.

A corrector 113 (R(h) in Fig. 8) performs correction on the boundary of the keyword segment in the provisional prediction that is the global detection result indicated by reference numeral E1 using the information near the boundary and acquires final prediction indicated by reference numeral E2. The correction of the boundary of the keyword segment may be performed using only information near the boundary.

The corrector 113 performs the process based on following (Formula 17) when M is an adjacent width (odd number).

[Mathematical Formula 17]

$$\mathcal{H}^M \to \mathbb{Z} \, (\text{Formula } 17)$$

In the example illustrated in Fig. 8, the corrector 113 ($R(h_{10:16})$) that performs correction in a character string having a near width M = 7 and n = 10 to 16 and the corrector 113 ($R(h_{35:41})$) that performs correction in a character string having n = 35 to 41 are illustrated. n represents the number of characters from the left end of the character string. $R(h_{10:16})$ is corrected by +2 (two in the direction of the end point of the character string). $R(h_{35:41})$ is corrected by -1 (one in the direction of the start point of the character string).

The corrector 113 performs training based on the residual of the segment boundary in the training data. A residual Error is represented by Error = (true start point - corrected start point)$^2$ + (true end point - corrected end point)$^2$ when the start point and the end point are positions (n-th character) at both ends of the keyword segment. Note that the start point after correction = a provisional start point + a correction width, and the end point after correction = a provisional end point + a correction width.

For example, when the true start point of the keyword stuffing is the 10th character, and the start point of the keyword segment predicted by the detector 112(S) is the 8th character, the residual becomes "+2" at "10 - 8". The corrector 113(R) is trained to output a residual "+2" using information near the 8th character. When the corrector 113(R) is successfully trained, a "predicted provisional start point + an output of the corrector" matches the "true start point".

Since the corrector 113(R) takes a feature amount h as an argument, character information may be used. However, it is likely that some information related to the position is embedded by T(v) in the feature amount h. Therefore, although the corrector 113(R) explicitly uses only the feature amount h that is another expression of the character information, it is likely that the feature amount h has the position information, and as a result, the corrector 113(R) also uses the position information.

[B-2] Operation Example

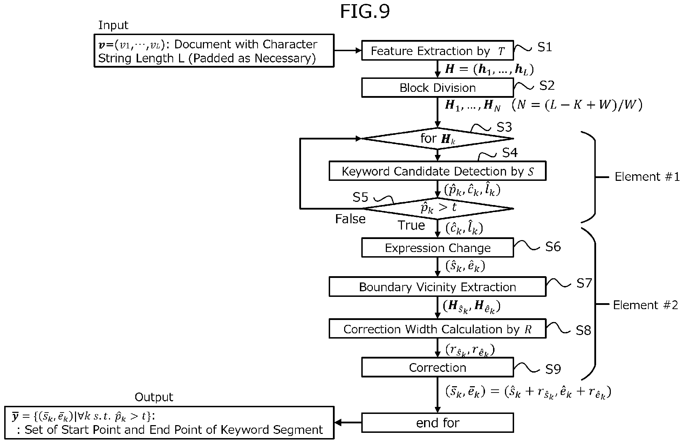

A prediction process of keyword stuffing in the embodiment is described with reference to a flowchart (steps S1 to S9) illustrated in Fig. 9. A process of Element #1 in steps S3 to S5 is performed by the detector 112(S), and a process of Element #2 in steps S6 to S9 is performed by the corrector 113(R).

A feature extractor 111(T) performs feature extraction on a document v = ($v_1$,..., and $v_L$) with a character string length L padded as needed and outputs H = ($h_1$,..., and $h_L$) (step S1).

The feature extractor 111(T) performs block division and outputs H1,..., and HN(N = (L - K + W)/W) (step S2).

The detector 112(S) repetitively performs the process of Element #1 on Hk (step S3).

The detector 112(S) detects a keyword candidate, and outputs

[Mathematical Formula 18]

$$(\hat{p}_k, \hat{c}_k, \hat{l}_k)$$

(step S4).

The detector 112(S) determines whether the following (Formula 18) is established (step S5). Note that t represents a threshold of the presence or absence of the keyword.

[Mathematical Formula 19]

$$\hat{p}_k > t \quad \text{(Formula 18)}$$

When (Formula 18) is not established (see False route of step S5), the process returns to step S3.

Meanwhile, when (Formula 18) is established (see True route of step S5), the corrector 113(R) changes the expression (center, length) of the keyword segment

[Mathematical Formula 20]

$$(\hat{c}_k, \hat{l}_k)$$

to the expression (start point, end point) of the keyword segment

[Mathematical Formula 21]

$$(\hat{s}_k, \hat{e}_k)$$

(step S6).

The corrector 113(R) extracts the vicinity of the boundary

[Mathematical Formula 22]

$$(\boldsymbol{H}_{\hat{s}_k}, \boldsymbol{H}_{\hat{e}_k})$$

(step S7).

The corrector 113(R) calculates a correction width and outputs

[Mathematical formula 23]

$$(r_{\hat{s}_k}, r_{\hat{e}_k})$$

(step S8).

The corrector 113(R) performs correction, calculates the following (Formula 19) (step S9), and outputs (Formula 20) that is a set of the start and end points of the keyword segment. Then, the keyword stuffing prediction process ends.

[Mathematical Formula 24]

$$(\bar{s}_k, \bar{e}_k) = (\hat{s}_k + r_{\hat{s}_k}, \hat{e}_k + r_{\hat{e}_k}) \quad \text{(Formula 19)}$$

[Mathematical Formula 25]

$$\bar{y} = \{(\bar{s}_k, \bar{e}_k) | \forall k \; s.t. \; \hat{p}_k > t\} \quad \text{(Formula 20)}$$

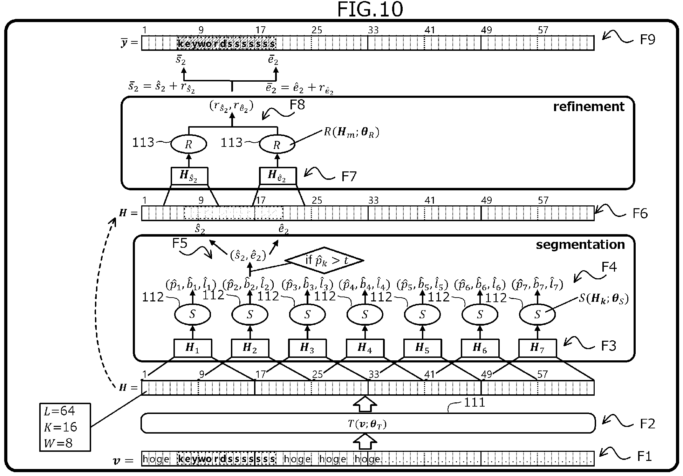

Next, the keyword stuffing prediction process in the embodiment is described with reference to Fig. 10 (reference numerals F1 to F9).

The feature extractor 111(T) receives a text input $v = (v_1,...,$ and $v_L)$ (see reference numeral F1). The input $v$ is the character string length L and may be padded as needed.

The feature extractor 111(T) acquires a feature expression $h_1 (I = 1,...,$ and L) of each character with respect to the input $v$ (see reference numeral F2).

The feature extractor 111(T) aggregates $h_1$ for each block and inputs $H_k$ to the detector 112(S) (see reference numeral F3).

The detector 112(S) acquires a three-dimensional vector $(p_k, c_k, l_k)$ based on $H_k$ (see reference numeral F4). $p_k$ is a probability representing whether keyword stuffing is present in the block k, $c_k$ is coordinate of a center position when keyword stuffing is present in the block k, and $l_k$ is a length when keyword stuffing is present in the block k.

The detector 112(S) extracts, for each block, a block in which it is determined that keyword stuffing is present, that is, a block satisfying the following (Formula 21) (see reference numeral F5).

[Mathematical Formula 26]

$$\hat{p}_k > t \quad \text{(Formula 21)}$$

The detector 112(S) calculates provisional start point position coordinates of the block in which it is determined that keyword stuffing is present

[Mathematical Formula 27]

$$\hat{s}_k$$

and provisional end point position coordinates

[Mathematical Formula 28]

$$\hat{e}_k$$

(see reference numeral F6).

The corrector 113(R) aggregates $h_1$ corresponding to characters positioned in the vicinity thereof for each

[Mathematical Formula 29]

$$\hat{s}_k, \quad \hat{e}_k$$

and configures

[Mathematical Formula 30]

$$H_{\hat{s}_k}, \quad H_{\hat{e}_k}$$

(see reference numeral F7).

The corrector 113(R) acquires, for each

[Mathematical Formula 31],

$$H_{\hat{s}_k}, \quad H_{\hat{e}_k}$$

correction widths of the start and end points

[Mathematical Formula 32]

$$r_{\hat{s}_k}, r_{\hat{e}_k}$$

(see reference numeral F8).

The corrector 113(R) adds, to the provisional start and end points

$$[\text{Mathematical Formula 33}],$$

$$\hat{s}_k, \ \hat{e}_k$$

the correction widths

$$[\text{Mathematical Formula 34}]$$

$$r_{\hat{s}_k}, r_{\hat{e}_k}$$

and acquires final prediction start and end points

$$[\text{Mathematical Formula 35}]$$

$$\bar{s}_k, \ \bar{e}_k$$

(see reference numeral F9). Then, the keyword stuffing prediction process ends.

[B-3] Hardware Configuration Example

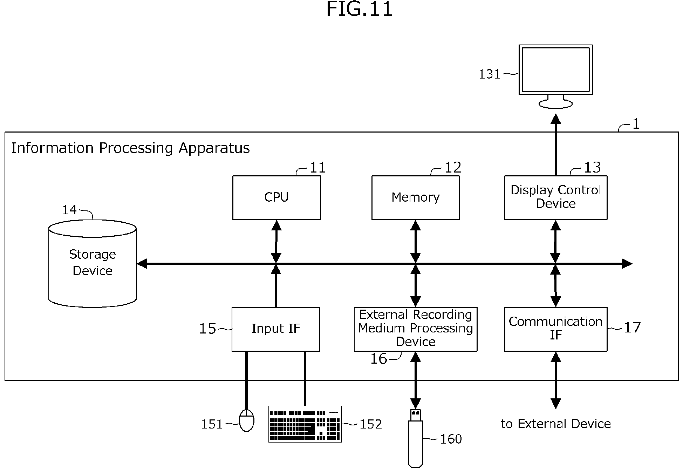

Fig. 11 is a block diagram schematically illustrating a hardware configuration example of an information processing apparatus 1.

As illustrated in Fig. 11, the information processing apparatus 1 includes a CPU 11, a memory 12, a display control device 13, a storage device 14, an input interface (IF) 15, an external recording medium processing device 16, and a communication IF 17.

The memory 12 is an example of a storage unit and is illustratively a read only memory (ROM), a RAM, and the like. A program such as Basic Input/Output System (BIOS) may be written into the ROM of the memory 12. A software program of the memory 12 may be appropriately read and executed by the CPU 11. In addition, the RAM of the memory 12 may be used as a temporary recording memory or a working memory.

The display control device 13 is connected to a display device 131 and controls the display device 131. The display device 131 is a liquid crystal display, an organic light-emitting diode (OLED) display, a cathode ray tube (CRT), an electronic paper display, or the like and displays various types of information for an operator or the like of the information processing apparatus 1. The display device 131 may be combined with an input device and may be, for example, a touch panel.

As the storage device 14, for example, a solid state drive (SSD), a storage class memory (SCM), or a hard disk drive (HDD) may be used. The storage device 14 may store a program for executing the keyword stuffing prediction process in the embodiment. Furthermore, the storage device 14 may store the input v and an output y illustrated in Fig. 4 and the like.

The input IF 15 may be connected to an input device such as a mouse 151 or a keyboard 152 to control the input device such as the mouse 151 or the keyboard 152. The mouse 151 and the keyboard 152 are examples of input devices, and the operator of the information processing apparatus 1 performs various input operations via these input devices.

The external recording medium processing device 16 is configured so that a recording medium 160 can be mounted. The external recording medium processing device 16 is configured to be able to read information recorded on the recording medium 160 in a state where the recording medium 160 is mounted. In this example, the recording medium 160 has portability. For example, the recording medium 160 is a non-transitory recording medium such as a flexible disk, an optical disk, a magnetic disk, a magneto-optical disk, or a semiconductor memory.

The communication IF 17 is an interface that enables communication with an external device.

The CPU 11 is an example of a processor, and the CPU 11 that is a processing device performing various types of control and operations realizes various functions by executing an OS and a program read in the memory 12. Note that the CPU 11 may be a multiprocessor including a plurality of CPUs, a multi-core processor including a plurality of CPU cores, or a configuration including a plurality of multi-core processors.

The CPU 11 functions as the feature extractor 111 and the detector 112 illustrated in Fig. 6 and the like and may function as the corrector 113 illustrated in Fig. 8 and the like.

The device that controls the entire operation of the information processing apparatus 1 is not limited to the CPU 11 and may be, for example, any one of an MPU, a DSP, an ASIC, a PLD, and an FPGA. Furthermore, the device that controls the operation of the entire information processing apparatus 1 may be a combination of two or more types of CPU, MPU, DSP, ASIC, PLD, and FPGA. Note that MPU is an abbreviation for Micro Processing Unit, DSP is an abbreviation for Digital Signal Processor, and ASIC is an abbreviation for Application Specific Integrated Circuit. In addition, PLD is an abbreviation for Programmable Logic Device, and FPGA is an abbreviation for Field Programmable Gate Array.

[C] Effects

According to the prediction program, the information processing apparatus 1, and the prediction method in the above-described embodiment, for example, the following effects can be obtained.

The feature extractor 111 allocates the input first character string to a block that satisfies a predetermined condition. The detector 112 predicts the probability that keyword stuffing is present in the second character string by using the feature amount of each character of the second character string included in each block. The detector 112 predicts the center and the length of the keyword segment in the second character string when the probability is equal to or greater than a predetermined threshold.

As a result, keyword stuffing can be detected properly. Specifically, the presence probability of the keyword stuffing is obtained for each block, and the center and the length of a keyword (in other words, a keyword segment) to be detected as the keyword stuffing are predicted. Therefore, even when the character length of the keyword segment is long, the target keyword can be detected without interruption.

In addition, since the detection in units of characters is language independent, the keyword stuffing prediction process according to the embodiment can be applied in units of tokens by using a multi-lingual tokenizer.

The process of predicting the probability predicts the probability that the true center of keyword stuffing is present in the second character string.

As a result, the keyword can be more appropriately detected by predicting the presence probability of the center.

The corrector 113 corrects a boundary position indicating at least one of start and end positions in the first character string obtained based on the predicted center and length of the keyword segment to an adjacent position indicating a position of a character positioned near the character at the boundary position.

In order to make the detection result continuous, global detection of outputting one prediction result in a certain length unit is suitable. Meanwhile, accuracy in a character unit is demanded for a boundary of the prediction result. Therefore, a method using only local information near the boundary is suitable for boundary prediction. Therefore, by correcting the prediction result by the global detection using the local information using the corrector 113, continuous detection can be realized while the prediction accuracy for the keyword segment boundary is maintained.

In the process of allocating to the block, allocation is performed in which at least some of the second character strings included in the adjacent blocks overlap each other.

As a result, the blocks can be allocated in consideration of the correction of the boundary position by the corrector 113.

The detector 112 performs training so that the center of the keyword segment matches the true center of keyword stuffing.

As a result, the accuracy of the detector 112 can be improved.

[D] Others

The disclosed technology is not limited to the above-described embodiments, and various modifications can be made without departing from the gist of the present embodiment. Each configuration and each processing of the present embodiment can be selected or omitted as needed or may be appropriately combined.

[Description of Reference Sign]

1 Information processing apparatus

11 CPU
111 Feature extractor
112 Detector
113 Corrector
12 Memory

13 Display control device 131 Display device
14 Storage device
15 Input IF
151 Mouse
152 Keyboard
16 External recording medium processing device
160 Recording medium
17 Communication IF

**Claims**

1. A prediction program that causes a computer to execute a process comprising:

   allocating an input first character string to a block that satisfies a predetermined condition;
   predicting, by using a feature amount of each character of a second character string in each block and a detector configured to detect keyword stuffing, a probability that keyword stuffing is present in the second character string; and
   predicting a center and a length of a keyword segment in the second character string when the probability is a predetermined threshold or more.

2. The prediction program according to claim 1,
   wherein the predicting of the probability is to predict a probability that a true center of the keyword stuffing is present in the second character string.

3. The prediction program according to claim 1 or 2, further comprising:

   correcting a boundary position indicating at least one of a start position and an end position in the first character string that is obtained based on the predicted center and the predicted length of the keyword segment to an adjacent position indicating a position of a character positioned adjacent to the character of the boundary position with a corrector configured to correct the boundary position.

4. The prediction program according to claim 1 or 2,
   wherein the allocating to the block is to allocate at least a part of the second character string in each adjacent block in a manner of overlapping each other.

5. The prediction program according to claim 2, further comprising:
   training the detector so that the center of the keyword segment matches the true center of the keyword stuffing.

6. An information processing apparatus with a processor that execute a process comprising:

   allocating an input first character string to a block that satisfies a predetermined condition;
   predicting, by using a feature amount of each character of a second character string in each block and a detector configured to detect keyword stuffing, a probability that keyword stuffing is present in the second character string; and
   predicting a center and a length of a keyword segment in the second character string when the probability is a predetermined threshold or more.

7. The information processing apparatus according to claim 6,
   wherein a process of predicting the probability is to predict a probability that a true center of the keyword stuffing is present in the second character string.

8. The information processing apparatus according to claim 6 or 7,
   wherein the processor corrects a boundary position indicating at least one of a start position and an end position in the first character string that is obtained based on the predicted center and the predicted length of the keyword segment to an adjacent position indicating a position of a character positioned adjacent to the character of the boundary position with a corrector configured to correct the boundary position.

9. The information processing apparatus according to claim 6 or 7,
wherein the allocating to the block is to allocate at least a part of the second character string in each adjacent block in a manner of overlapping each other.

10. The information processing apparatus according to claim 7,
wherein the processor trains the detector so that the center of the keyword segment matches the true center of the keyword stuffing.

11. A prediction method that causes a computer to execute a process comprising:

allocating an input first character string to a block that satisfies a predetermined condition;
predicting, by using a feature amount of each character of a second character string in each block and a detector configured to detect keyword stuffing, a probability that keyword stuffing is present in the second character string; and
predicting a center and a length of a keyword segment in the second character string when the probability is a predetermined threshold or more.

12. The prediction method according to claim 11,
wherein the predicting of the probability is to predict a probability that a true center of the keyword stuffing is present in the second character string.

13. The prediction method according to claim 11 or 12, further comprising:
correcting a boundary position indicating at least one of a start position and an end position in the first character string that is obtained based on the predicted center and the predicted length of the keyword segment to an adjacent position indicating a position of a character positioned adjacent to the character of the boundary position with a corrector configured to correct the boundary position.

14. The prediction method according to claim 11 or 12,
wherein the allocating to the block is to allocate at least a part of the second character string in each adjacent block in a manner of overlapping each other.

15. The prediction method according to claim 12, further comprising:
training the detector so that the center of the keyword segment matches the true center of the keyword stuffing.

FIG.1

A1

Fugaku, Kozuchi, Actlyzer,
Fujitsu Limited today revealed plans to open a new
center for research and development in Tel Aviv,
accelerating the recruitment of world-class talent
to advance innovation in the field of Data and
Security, an urgent priority for businesses and
society in an era of increasing connectivity and
uncertainty. nhs heroes. fresh appeal. ratings
system. 6 april 1994. including almost. black
pearl. recent diagnosis. little flirt. diaper
completely. following year posed. nine month.
From April 2023, the newly established location in
Tel Aviv will allow Fujitsu to further enhance its
presence in Israel with a team composed of experts
recruited from Israel alongside researchers from
Japan and Europe. This team will be dedicated to
strengthening security technology for
communications networks as part of Fujitsu's
global strategy for Data and Security, one of 5
key technology areas under the company's global
R&D strategy.

Detection
Technology

A2

Fugaku, Kozuchi, Actlyzer,
Fujitsu Limited today revealed plans to open a new
center for research and development in Tel Aviv,
accelerating the recruitment of world-class talent
to advance innovation in the field of Data and
Security, an urgent priority for businesses and
society in an era of increasing connectivity and
uncertainty. nhs heroes. fresh appeal. ratings
system. 6 april 1994. including almost. black
pearl. recent diagnosis. little flirt. diaper
completely. following year posed. nine month.
From April 2023, the newly established location in
Tel Aviv will allow Fujitsu to further enhance its
presence in Israel with a team composed of experts
recruited from Israel alongside researchers from
Japan and Europe. This team will be dedicated to
strengthening security technology for
communications networks as part of Fujitsu's
global strategy for Data and Security, one of 5
key technology areas under the company's global
R&D strategy.

FIG.2

$\hat{y} =$ (Fugaku,_Kozuchi,_Actlyzer:_¥nFujitsu_Limited_today_revealed)
1 1 1 1 1 1 1 1 1 1 1 1 1 1 1 1 1 1 1 1 1 1 1 1 1 1 1 0 0 0 0 0 0 0 0 0 0 0 0 0 0 0 0 0 0 0 0 0 0 0 0 0 0 0 0 0 0 0 0

B3

$\hat{y}_k = \sigma(\boldsymbol{w}^T \boldsymbol{h}_k)$   B2

$\boldsymbol{h}_k \in \mathbb{R}^{256}$

$\boldsymbol{h}_1$   $\boldsymbol{h}_L$

$T(\boldsymbol{v})$

B1

$\boldsymbol{v} =$ Fugaku,_Kozuchi,_Actlyzer,_¥nFujitsu_Limited_today_revealed

FIG.3

# FIG.4

## Input/output Description Example

$v_1$      $v_{40}$

$v = $ hogehoge keywords hogehogehoge keywords2
$y = $ 00000000011111111000000000000000111111111

$y_1$      $y_{40}$

Keyword Segment #1

$$y_{se}^1 = (10,17)$$

$$y_{cl}^1 = \left(\frac{13.5}{L}, \frac{8}{L}\right)$$

Keyword Segment #2

$$y_{se}^2 = (32,40)$$

$$y_{cl}^2 = \left(\frac{36}{L}, \frac{9}{L}\right)$$

# FIG.5

Backbone Network Structure

$h_1$

$h_L$

111

$T(v; \theta_T)$

$v \in \mathcal{V}^L$

FIG.6

# FIG.7

$1/L \ (= a_1)$  $9/L \ (= a_2)$  $17/L \ (= a_3)$  $25/L \ (= a_4)$  $33/L \ (= a_5)$  $41/L \ (= a_6)$  $49/L \ (= a_7)$

| hoge | **keywordsssssss** | hoge | hoge | hoge | | |

$$b = \frac{3}{L}$$

$$c = \frac{12}{L}$$

FIG.8

Final Prediction

Provisional Prediction
(Global Detection Result)

$R(\boldsymbol{h}_{10:16})$ $(M=7)$

$R(\boldsymbol{h}_{35:41})$ $(M=7)$

$+2$

$-1$

113

113

E2

E1

# FIG.9

Input

$\boldsymbol{v}=(v_1,\cdots,v_L)$: Document with Character String Length L (Padded as Necessary)

Feature Extraction by $T$ — S1

$\boldsymbol{H}=(\boldsymbol{h}_1,\dots,\boldsymbol{h}_L)$

Block Division — S2

$\boldsymbol{H}_1,\dots,\boldsymbol{H}_N\quad(N=(L-K+W)/W)$

for $\boldsymbol{H}_k$ — S3

Keyword Candidate Detection by $S$ — S4

$(\hat{p}_k,\hat{c}_k,\hat{l}_k)$

S5 — $\hat{p}_k>t$

False / True — $(\hat{c}_k,\hat{l}_k)$

Element #1

Expression Change — S6

$(\hat{s}_k,\hat{e}_k)$

Boundary Vicinity Extraction — S7

$(\boldsymbol{H}_{\hat{s}_k},\boldsymbol{H}_{\hat{e}_k})$

Correction Width Calculation by $R$ — S8

$(r_{\hat{s}_k},r_{\hat{e}_k})$

Correction — S9

Element #2

$(\bar{s}_k,\bar{e}_k)=(\hat{s}_k+r_{\hat{s}_k},\hat{e}_k+r_{\hat{e}_k})$

end for

Output

$\bar{\boldsymbol{y}}=\{(\bar{s}_k,\bar{e}_k)|\forall k\ s.t.\ \hat{p}_k>t\}$:
: Set of Start Point and End Point of Keyword Segment

21

## FIG.10

# FIG.11

Information Processing Apparatus

- 131 (monitor/display)
- 1
- 11 CPU
- 12 Memory
- 13 Display Control Device
- 14 Storage Device
- 15 Input IF
- 16 External Recording Medium Processing Device
- 17 Communication IF
- 151 (mouse)
- 152 (keyboard)
- 160 (external recording medium)
- to External Device

Europäisches
Patentamt

European
Patent Office

Office européen
des brevets

# EUROPEAN SEARCH REPORT

**Application Number**

EP 25 18 5780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/101115 A1 (ZHOU XIN [CN] ET AL) 31 March 2022 (2022-03-31) * paragraphs [0023], [0031], [0033] - [0035]; figures 7,10 * | 1-15 | INV. G06F40/284 |

-----

| | | | TECHNICAL FIELDS SEARCHED (IPC) |
|---|---|---|---|
| | | | G06F |

The present search report has been drawn up for all claims

| Place of search | Date of completion of the search | Examiner |
|---|---|---|
| The Hague | 13 November 2025 | Bercan, Radu |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
  .........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 5780

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | Publication date | Patent family member(s) | Publication date |
|---|---|---|---|
| US 2022101115 A1 | 31-03-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018077806 A
- JP 2020046792 A
- US 20070192309 A
- US 20230107493 A